Europäisches Patentamt

European Patent Office

Office européen des brevets

(11) Numéro de publication: **0 168 100 B1**

## FASCICULE DE BREVET EUROPEEN

(45) Date de publication du fascicule du brevet:
01.06.88

(51) Int. Cl.⁴: **F 16 L 27/12**

(21) Numéro de dépôt: **85201023.0**

(22) Date de dépôt: **27.06.85**

(54) **Raccordement par emboîtement pour éléments de tuyaux.**

(30) Priorité: **09.07.84  FR 8410996**

(43) Date de publication de la demande:
**15.01.86 Bulletin 86/3**

(45) Mention de la délivrance du brevet:
**01.06.88 Bulletin 88/22**

(84) Etats contractants désignés:
**AT BE CH DE FR GB IT LI LU NL SE**

(56) Documents cités:
**DE - C - 815 777**
**FR - A - 2 139 688**
**GB - A - 2 017 856**

(73) Titulaire: **DRAKA POLVA B.V., Vlaardingenlaan 11,
NL-1062 HM Amsterdam (NL)**

(72) Inventeur: **Guitoneau, Hans, Madame Curiestraat, 22,
Bovenkarspel (NL)**

(74) Mandataire: **Bouchoms, Maurice et al, Solvay & Cie
Département de la propriété industrielle 310, rue de
Ransbeek, B-1120 Bruxelles (BE)**

## Description

La présente invention concerne un raccordement par emboîtement pour éléments de tuyaux permettant un déplacement axial relatif des éléments de tuyaux raccordés.

Lors de la réalisation de canalisations par emboîtement de tuyaux notamment de canalisations enterrées pour la collecte et l'écoulement des eaux il arrive, en particulier sous l'effet d'un tassement de sol, que les canalisations soient soumises à des contraintes axiales qui peuvent entraîner des birs lorsque les raccordements sont réalisés de façon rigide, c'est-à-dire interdisant un déplacement axial des tuyaux raccordés.

Afin d'éviter de tels inconvénients, il a dejà été proposé dans la demande de brevet NL-A-7 605 576, de réaliser des canalisations dans lesquelles les raccordements autorisent un éventuel déplacement axial relatif des éléments de tuyaux raccordés. A cet effet, le raccordement est effectué par emboîtement au moyen d'embouts mâle et femelle, l'embout femelle étant grani intérieurement d'un manchon déplaçable axialement enserré entre les embouts mâle et femelle, ce manchon étant équipé intérieurement d'un rebord annulaire qui prend appui sur un rebord interne prévu dans l'embout femelle. Dans ce mode de réalisation, le rebord annulaire du manchon déplaçable est réalisé de façon telle qu'il peut se briser en cas de sollicitation externe axiale et ainsi permettre un déplacement axial des éléments de tuyaux raccordés. Toutefois il apparaît que dans ce type de raccordement, le rebord annulaire du manchon déplaçable lors de son bris se trouve dans la canalisation et qu'il peut, dès lors, entraîner des ennuis tels que des obstructions.

La présente invention a pour but de fournir un raccordement par emboîtement pour éléments de tuyaux qui permet un déplacement axial relatif des éléments de tuyaux raccordés et qui ne présente par l'inconvénient sus-mentionné.

La présente invention concerne, dès lors, un raccordement par emboîtement pour éléments de tuyaux permettant un déplacement axial relatif des éléments de tuyaux raccordés comprenant un embout mâle et un embout femelle dans lequel l'embout femelle est garni intérieurement d'un manchon déplaçable axialement enserré entre les embouts mâle et femelle et équipé intérieurement d'un rebord annulaire de butée pour l'extrémité de l'embout mâle qui se caractérise en ce que le manchon déplaçable est équipé sur sa paroi externe d'une pluralité de nervures annulaires espacées cassables, la nervure la plus proche du rebord annulaire de butée du manchon prenant appui sur un rebord annulaire de butée interne prévu dans l'embout femelle.

Dans le raccordement conforme à la présente invention, les nervures annulaires qui peuvent être continues ou discontinues et de profil quelconque sont généralement réalisés de façon telle que celles-ci si brisent lorsqu'elles sont soumises à une charge dépassant 8 N/mm². Selon un autre mode de réalisation qui peut se révéler intéressant les nervures annulaires successives peuvent être réalisées de façon telle que celles-ci se brisent lorsqu'elles sont soumises à des charges croissantes, la nervure prenant appui sur le rebord annulaire de butée interne étant réalisée de façon à se briser pour une charge dépassant 12 N/mm² appliquée à une vitesse de 50 mm/min.

Dans le raccordement conforme à la présente invention, les nervures brisées lors d'un déplacement axial relatif des éléments de tuyaux sous l'effet d'une sollicitation externe restent emprisonnées entre la paroi externe du manchon déplaçable et la paroi interne de l'embout femelle et, dès lors, celles-ci ne peuvent perturber le fonctionnement de la canalisation.

En outre, dans le raccordement conforme à la présente invention, le déplacement axial relatif des éléments de tuyaux raccordés est effectué par étapes successives correspondant aux bris successifs des nervures annulaires équipant la paroi externe du manchon déplaçable.

Par ailleurs, dans le raccordement conforme à l'invention le rebord annulaire de butée du manchon déplaçable lors de son déplacement axial sous l'effet d'une sollicitation externe peut prendre appui sur un second rebord annulaire interne de butée prévu dans l'embout femelle, ce second rebord annulaire interne de butée étant disposé de façon telle que le rebord annulaire interne de butée du manchon déplaçable n'entre en contact avec celui-ci qu'après le bris de toutes les nervures contre le premier rebord annulaire de butée interne de l'embout femelle. De cette façon on évite un déplacement axial relatif excessif des éléments de tuyaux sous l'effet d'une sollicitation externe.

Le raccordement selon l'invention peut être exploité pour réaliser des canalisations à partir d'éléments de tuyaux réalisés en n'importe quel matériau tel que le fibro-ciment, les métaux ou les matières plastiques.

Dans le raccordement selon l'invention, le manchon déplaçable est, de préférence, réalisé en un matériau thermoplastique et notamment à partir d'une polyoléfine telle que le polyéthylène ou le polypropylène.

Afin de garantir une bonne étanchéité du raccordement, on peut, ainsi qu'il est de pratique générale, équiper l'extrémité de l'embout femelle d'un joint annulaire d'étanchéité.

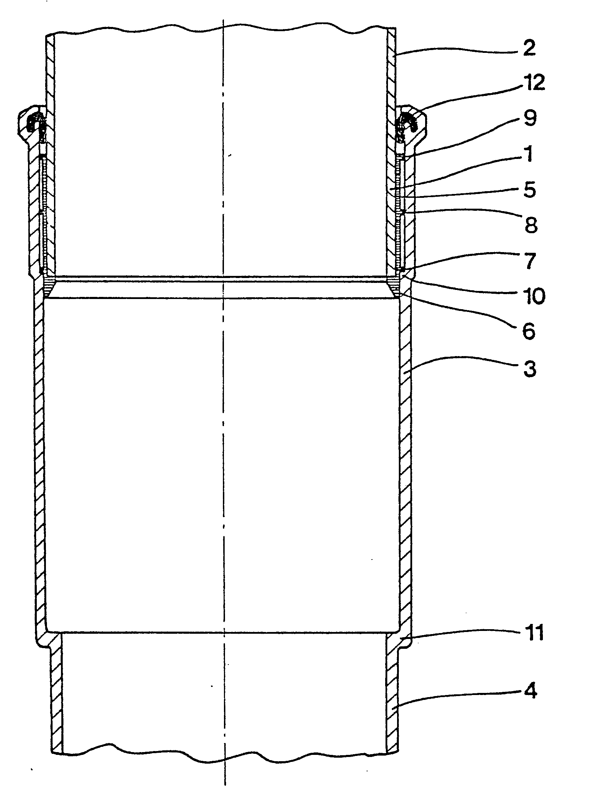

Le raccordement par emboîtement conforme à la présente invention est par ailleurs explicité plus en détail dans la description qui va suivre d'un mode de réalisation pratique et dans laquelle on se référera à la figure unique du dessin annexé.

Ainsi qu'il apparaît à la figure du dessin annexé qui représente, en coupe, un raccordement par emboîtement conforme à la présente invention, le raccordement est assuré par emboîtement de l'embout mâle 1 dans l'élément de tuyau 2 dans l'embout femelle 3 d'un élément de tuyau 4.

L'embout femelle 3 est garni d'un manchon 5 déplaçable axialement réalisé en polyéthylène qui est enserré entre l'embout mâle 1 et l'embout femelle 3. Ce manchon déplaçable est équipé d'un rebord annulaire de butée 6 contre lequel vient buter l'extrémité de l'embout mâle 1. Conformément à l'invention la paroi externe du manchon 5 déplaçable est équipée

2

de trois nervures annulaires expacées et cassables 7, 8 et 9 la nervure 7 la plus proche du rebord annulaire de butée 6 prenant appui sur un rebord annulaire de butée interne 10 prévu dans l'embout femelle 3.

En outre, l'embout femelle 3 présente un second rebord annulaire interne de butée 11 et est équipé dans sa partie terminale d'un joint d'étanchéité annulaire 12.

Lors du montage du raccordement représenté, les deux éléments de tuyaux 2 et 4 sont emboîtés comme représenté à la figure. Lorsqu'en cours de service, les tuyaux subissent des contraintes extérieures telles que l'élément de tuyau 2 tend à pénétrer plus profondément dans l'élément de tuyau 4, le déplacement relatif de ces éléments de tuyau est empêché par l'appui de la nervure 7 contre le rebord annulaire de butée 10. Toutefois lorsque la charge imposée à la nervure 7 par l'embout mâle 1 via le rebord annulaire de butée 6 dépasse sa limite de résistance, la nervure 7 se brise et l'élément de tuyau 2 peut pénétrer dans l'embout femelle 3, cette pénétration pouvant se poursuivre jusqu'au moment où la seconde nervure 8 entre en contact avec le rebord annulaire de butée 10. Dans le cas où la sollicitation se poursuit, la seconde nervure 8 peut se briser contre le rebord annulaire de butée 10 et l'élément de tuyau 2 peur poursuivre son déplacement jusqu'au moment où la troisième nervure 9 entre encontact avec le rebord annulaire de butée 10. Si la sollicitation persiste, la nervure 9 peut se briser à son tour et, dans ce cas, le déplacement axial de l'élément de tuyau 2 n'est plus entravée jusqu'au moment où l'extrémité de l'embout mâle 1 de cet élément de tuyau entre en contact avec le second rebord annulaire de butée 11 ce qui empêche tout déplacement ultérieur de l'élément de tuyau 2 et partant un déplacement axial relatif excessif des éléments de tuyau 1 et 2.

Ainsi qu'il apparaît clairement sur la figure, lors du bris successif des nervures 7, 8 et 9, les nervures brisées restent emprisonnées entre la paroi externe du manchon déplaçable 5 et la paroi interne de l'embout femelle 3 et ne peuvent donc pénétrer dans la canalisation formée par les éléments de tuyau 2 et 4.

## Revendications

1. Raccordement par emboîtement pour éléments de tuyaux permettant un déplacement axial relatif des éléments de tuyaux raccordés comprenant un embout mâle (1) et un embout femelle (3) dans lequel l'embout femelle (3) est garni intérieurement d'un manchon (5) déplaçable axialement enserré entre les embouts mâle (1) et femelle (3) et équipé intérieurement d'un rebord annulaire de butée (6) pour l'extrémité de l'embout mâle (1) caractérisé en ce que le manchon (5) déplaçable est équipé sur sa paroi externe d'une pluralité de nervures (7, 8, 9) annulaires espacées cassables, la nervure (7) la plus proche du rebord annulaire de butée (6) prenant appui sur un rebord annulaire de butée interne (10) prévu dans l'embout femelle (3).

2. Raccordement selon la revendication 1 caractérisé en ce que les nervures annulaires (7, 8, 9) se brisent lorsqu'elles sont soumises à une charge dépassant 12 N/mm² appliquée à une vitesse de 50 mm/min.

3. Raccordement selon la revendication 1 ou 2 caractérisé en ce que lors de son déplacement axial sous l'effet d'une sollicitation externe, le rebord annulaire de butée (6) du manchon (5) déplaçable prend appui sur un second rebord annulaire interne de butée (11) prévu dans l'embout femelle (3), le second rebord annulaire interne de butée (11) étant disposé de façon telle que le rebord annulaire interne de butée (6) du manchon déplaçable (5) n'entre en contact avec celui-ci qu'après le bris de toutes les nervures annulaires espacées (7, 8, 9) contre le premier rebord annulaire de butée interne (10) de l'embout femelle (3).

4. Raccordement selon l'une quelconque des revendications 1 à 3 caractérisé en ce que le manchon déplaçable (5) est réalisé à partir d'une polyoléfine.

5. Raccordement selon l'une quelconque des revendications 1 à 4 caractérisé en ce que l'extrémité de l'embout femelle (3) est équipé d'un joint d'étanchéité annulaire (12).

## Patentansprüche

1. Einsteckverbindung für Rohrelemente, die eine relative axiale Verschiebung der verbundenen Rohrelemente zulässt, umfassend eine Einsteckmuffe (1) und eine äussere Muffe (3), wobei die äussere Muffe (3) innen mit einer axial verschiebbaren Hülse (5), die zwischen der Einsteckmuffe (1) und der äusseren Muffe (3) eingeschlossen ist und innen mit einem ringförmigen Randanschlag (6) für das Ende der Einsteckmuffe (1) ausgestattet ist, versehen ist, dadurch gekennzeichnet, dass die verschiebbare Hülse (5) auf ihrer äusseren Wand mit einer Vielzahl zerbrechlicher, mit Abstand angeordneter, ringförmiger Rippen (7, 8, 9) ausgestattet ist, wobei sich die dem ringförmigen Randanschlag (6) nächstgelegene Rippe (7) auf einem inneren ringförmigen Randanschlag (10), der in der äusseren Muffe (3) vorgesehen ist, abstützt.

2. Verbindung nach Anspruch 1, dadurch gekennzeichnet, dass die ringförmigen Rippen (7, 8, 9) brechen, wenn sie einer 12 N/mm² übersteigenden Last, die mit einer Geschwindigkeit von 50 mm/min aufgebracht wird, unterworfen werden.

3. Verbindung nach Anspruch 1 oder 2, dadurch gekennzeichnet, dass sich während ihrer axialen Verschiebung unter der Einwirkung einer äusseren Belastung, der ringförmige Randanschlag (6) der verschiebbaren Hülse (5) auf einem zweiten inneren ringförmigen Randanschlag (11), der in der äusseren Muffe (3) vorgesehen ist, abstützt, wobei der zweite innere ringförmige Randanschlag (11) so angeordnet ist, dass der innere ringförmige Randanschlag (6) der verschiebbaren Hülse (5) mit diesem nur nach dem Bruch aller mit Abstand angeordneten, ringförmigen rippen (7, 8, 9) an dem ersten inneren ringförmigen Randanschlag (10) der äusseren Muffe (3) in Kontakt kommt.

4. Verbindung nach einem der Ansprüche 1 bis 3, dadurch gekennzeichnet, dass eine verschiebbare Hülse (5) im wesentlichen aus einem Polyolefin besteht.

5. Verbindung nach einem der Ansprüche 1 bis 4, dadurch gekennzeichnet, dass das Ende der äusseren Muffe (3) mit einer ringförmigen Dichtung (12) ausgerüstet ist.

### Claims

1. Connection by insertion for pipe elements permitting relative axial displacement of the connected pipe elements comprising a male connector (1) and a female connector (3) in which the female connector (3) is fitted internally with an axially displaceable sleeve (5) gripped between the male (1) and the female (3) connectors and equipped internally with an annular stop shoulder (6) for the end of the male connector (1), characterized in that the displaceable sleeve (5) is equipped on its outer wall with a plurality of spaced, breakable annular ribs (7, 8, 9), the rib (7) nearest to the annular stop shoulder (6) bearing on an internal annular stop shoulder (10) provided in the female connector (3).

2. Connection according to Claim 1, characterized in that the annular ribs (7, 8, 9) break when they are subjected to a load exceeding 12 N/mm² applied at a speed of 50 mm/min.

3. Connection according to Claim 1 or 2, characterized in that, during its axial displacement under the effect of an external stress, the annular stop shoulder (6) of the displaceable sleeve (5) bears on a second internal annular stop shoulder (11) provided in the female connector (3), the second internal annular stop shoulder (11) being arranged in a manner such that the internal annular stop shoulder (6) of the displaceable sleeve (5) enters into contact with the latter only after the breaking of all the spaced annular ribs (7, 8, 9) against the first internal annular stop shoulder (10) of the female connector (3).

4. Connection according to any one of Claims 1 to 3, characterized in that the displaceable sleeve (5) is produced from a polyolefin.

5. Connection according to any one of Claims 1 to 4, characterized in that the end of the female connector (3) is equipped with an annular gasket (12).